# EUROPEAN PATENT APPLICATION

(11) **EP 2 985 947 A1**
(43) Date of publication of application: **17.02.2016**
(21) Application number: 14290250.1
(22) Date of filing: 14.08.2014
(51) Int. Cl.: H04L 9/32, H04L 12/28, B60L 11/18, H02J 3/14

(54) **Method for providing control of an electric device**

(71) Applicant: ALCATEL LUCENT, 92100 Boulogne-Billancourt (FR)
(72) Inventor: Kopp, Dieter, 70435 Stuttgart (DE); Stocker, Klaus, 70435 Stuttgart (DE); Templ, Wolfgang, 70435 Stuttgart (DE)
(74) Representative: Louis Pöhlau Lohrentz

(57) **Abstract**

The invention concerns a method for providing control of an electric device (1). The method comprises the steps of checking, by a residual-current circuit breaker (2), RCCB, a validity of an electronic certificate (3) contained by the electric device (1); if, by the RCCB (2), the electronic certificate (3) is determined to be invalid, breaking, by the RCCB (2), a power connection (4) of the electric device (1). The inventions concerns further a residual-current circuit breaker (2), RCCB, an electric device (1) and a software product used to implement the method for providing control of the electric device (1).

## Description

### Field of the invention

The invention is situated in the field of electric, i.e. electrical and electronic, devices and relates to a method for providing control of electric devices based on an electronic certificate, in particular by breaking a power connection of the electric device by means of a residual-current circuit breaker in case of invalidity of the electronic certificate.

### Background

Electric, electrical and electronic, devices need to be secure at operation. However, product piracies frequently involving unsafe electrical installation are generating high health risks to the users of the electric devices. Very often, a certification guaranteeing the security of an electric device is missing or faked, for example provided by an un-authorized organisation and possibly mimicking an authorized certificate without being one. In other cases, a certification might be provided on the electric device without the electric device has been tested thoroughly.

Currently, the validity of a device might be controlled based on a certificate provided on the device including RFIDs. However, in case of invalid certificate, the device might be assumed to be secure, if the invalidity of the certification is not detected.

Furthermore, for electric device which need a current or power connection to be operated, a residual-current device (RCD) or a residual-current circuit breaker (RCCB) or residual twin-direct current couplet (R2D2) might be provided between the electric device and the electric main circuit and cut off the current in case the electric current is not balanced between the energized conductor and the return neutral conductor. However, a RCD/ RCCB/ R2D2 does not provide protection against overcurrent (overload) or all kind of short-circuit conditions.

Therefore, even in case of an installed RDC/ RCCB/ R2D2, an electric device which does not operate correctly, provides high risk to the user's health or might provide damage to the other products or the surrounding, where the electric device is installed, by fire etc. In particular, due to an invalid certification provided on the electric device, the electric device might be operated without being actually secure and might cause damage which can not be protected against be a RDC/ RCCB/ R2D2.

Therefore, there is a need to provide an at least improved protection against damages which might be caused by an electric device.

### Summary

The objective of the invention is achieved by a method for providing control of an electric device. A residual-current circuit breaker, RCCB, checks the validity of an electronic certificate contained by the electric device. If the RCCB determines that the electronic certificate is invalid, the RCCB breaks a power connection of the electric device.

The objective of the invention is further achieved by a residual-current circuit breaker, RCCB, wherein the residual-current circuit breaker comprises power breaking means and a controller being adapted to check a validity of an electronic certificate contained by an electric device and, if the RCCB determines that the electronic certificate is invalid, to break a power connection between an electric power source and the electric device by the power breaking means.

The objective of the invention is further achieved by an electric device comprising power breaking means and a controller being adapted to check a validity of an electronic certificate contained by the electric device and, if the controller determines that the electronic certificate is invalid, to break a power connection between an electric power source and the electric device by the power breaking means.

Preferably, the feature "to break the power connection" is understood as to cut off the electrical connection between the electric device and an electric power source, in particular to cut off the electrical connection between the electric device and the main circuit.

The objective of the invention is further achieved by a software product adapted to execute the method for providing control of an electric device, when executed on a computer, in particular on a controller of the RCGB and/or a controller of the electric device.

Throughout this invention, by the use of the feature "RCCB", a RDC or a R2D2 is referred to similarly. Furthermore, the feature "electric devices" comprises electrical devices and/or electronic devices. Thus, an "electric" device might be an electrical device or an electronic device. The electric device might in particular be a household appliance, such as a cooking device, refrigerator, electric oven, etc., or a telecommunication device, such as a television, a radio, or a further electric device, such as an electric shaver or hairdryer. What is described in the context of an electric device applies to two or more electric devices analogously. The invention might be implemented by the use of hardware, software or combination thereof.

Further features and advantages are described in preferred embodiments. The embodiments are not to be understood as being exclusive, but as being combinable, forming further preferred embodiments.

In a preferred embodiment, the electronic certificate comprises one or more of the group of: a unique device identification of the electric device, a certification number, a certification time frame, information on a production location, on a guarantee period, on a remaining time of guarantee validity, on a date of initial usage, on a number of operating hours, on a certification institute, on a certification location.

In a preferred embodiment, the validity of the electronic certificate is checked during idle mode of the electric device. The electric device is connected to the electric main circuit, but is not in operation mode, but only in idle mode. However, a small current flows through the electric device being in idle mode and a small voltage is applied on the electric contacts of the electric device. For example, in case the electric device is a television, the television is plugged into the electric main circuit, but the television is not switched on for providing pictures and sound, but is kept into the passive state or idle state without being fully switched off, this means the television is not fully disconnected from the electric main circuit in this idle state.

In a preferred embodiment, the validity of the electronic certificate is checked during operation mode of the electric device. The electric device is operated, for example in case the electric device is a television, the television is switched on and provides pictures and sound.

Preferably, the validity of the electronic certificate is checked at the moment, when the electric device is switched on for operation.

In preferred embodiments, the validity of the electric device is checked in regular time intervals. In a preferred embodiment, the validity of the electric device is checked automatically at regular time intervals, for example, every day at a determined time, or several times on every day, or every week. In preferred embodiments, the validity of the electric device is checked automatically at regular time intervals without regard whether the electric device is in idle mode or switched on. This means, in preferred embodiments the validity of the electric device is checked automatically at regular time intervals while the electric device is in idle mode or in operation mode. In further embodiments, the validity of the electric device is checked automatically at regular time intervals only if the electric device is in idle mode. In further embodiments, the validity of the electric device is checked automatically at regular time intervals only if the electric device is in operation mode.

In a preferred embodiment, the RCCB checks the validity of the electronic certificate based on information that the RCCB has stored in a memory. In particular, the RCCB retrieves information from the electronic certificate and compares this information with information stored in its memory. For example, the RCCB retrieves information about a number of the electronic certificate and determines based on data in its memory that the electronic certificate having this certificate number is expired and that therefore the electronic certificate is not valid any more.

In preferred embodiment, the RCCB checks, if the electric device has an electronic certificate at all, and if the electric device has no electronic certificate at all, the RCCB breaks the power connection of the electric device. In other words, the electric device has no valid electronic certificate comprises the situation that the electric device has no electronic certificate at all, because the electronic certificate is missing.

In a preferred embodiment, for checking the validity of the electronic certificate the electronic certificate of the electric device is checked with certification information retrieved from a certification institute. A certification institute might be an accreditation institute or a further institute which is authorized to provide electronic certificates for electric devices and the conditions under which the electronic certificates are valid or not valid, in particular not valid any more because of expiry of the validity.

In a preferred embodiment, the electronic certificate comprises a certification number (= number of the electronic certificate) and based on the certification number certification information is retrieved from the certification institute, wherein the certification information comprises information about one or more of: a certification time frame, information on a production location, on a guarantee period, on a remaining time of guarantee validity, on a date of initial usage, on a number of operating hours, on a certification institute, on a certification location. Based on the certification number the certification information related to the electronic certificate can be retrieved and based on the certification information, it is determined if the electronic certificate is valid or invalid. For example, it might be determined that the certification institute which provided the electronic certificate has declared the electronic certificate invalid because of inconsistencies of the certified electric device with other devices. Additionally or in combination to the number of the electronic certificate, the number of the electric device might be contained in the electronic certificate and used for retrieving certification information relating to the electric device and the corresponding electronic certificate.

In preferred embodiments, the electronic certificate comprises apart from a unique device identification of the electric device and/or a certification number further information such as a certification time frame, information on a production location, on a guarantee period, on a remaining time of guarantee validity, on a date of initial usage, on a number of operating hours, on a certification institute and/or on a certification location. This further information is mapped against the corresponding information retrieved from the certification institute, namely retrieved based on the number of the electric device and/or the certification number, and it is determined if the information is conform or if there is a mismatch between the information of the electric certificate and the corresponding information retrieved from the certification institute. For example, it is determined that the certification location indicated in the information in the electronic certificate is not the certification location indicated in the certification information retrieved from the certification institute. Based on the mismatch, it is determined that the electronic certificate is faked, thus invalid.

In preferred embodiments, the information contained in the electronic certificate and/or the certification information retrieved from the certification institute are encoded and the RCCB is provided with the (de)coding information to decode the information contained in the electronic certificate and the certification information retrieved from the certification institute, respectively. In preferred embodiments, the certification information retrieved from the certification institute comprises decoding information needed for reading the information contained in the electronic certificate. The encoding might also comprise encryption, and the decoding the corresponding decryption. Thus, the certification information retrieved from the certification institute and/or the information stored in the electronic certificate is encrypted. In preferred embodiments, only the RCCB has the key(s) for decrypting the certification information and/or the information stored in the electronic certificate. In preferred embodiments, the RCCB receives the key to decrypt the information stored in the electronic certificate from the certification institute. Preferably, the RCCB is able to access the certification institute to retrieve certification information only via a secured data connection comprising checking, if the RCCB is authorized, and/or encrypted data transmission.

In preferred embodiments, electric devices can be black-listed and the electronic certificate is invalid due to one or more of the following situations: certification time frame being expired, call-back situation of the electric device, e.g. because of construction errors or software bugs in regard of the electric device causing hazard, damage, etc. and/or guarantee period of the electric device being expired. The electric device might be called back, because the electric device has become inconsistent with other electric devices making the usage of the electric device dangerous so that the electronic certificate has become invalid.

In preferred embodiments, electric devices can be protected against unauthorized repairs, e.g. by a mechanical construction that destroys the electronic certificate when the housing of the electric device is opened. Preferably, only an authorized repair company is able of replacing and renewing the electronic certificate.

In preferred embodiments, the electronic certificate is installed within the housing of the electric device. In preferred embodiments, the electronic certificate is installed on or at the housing of the electric device.

In further preferred embodiments, the electronic certificate is installed on a switch of the electric device. In further preferred embodiments, the electronic certificate is installed at the mains adapter of the electric device.

In a preferred embodiment, the electronic certificate is mounted at the electric device as such that any manipulation will destroy the electronic certificate, for example if the housing of the electronic certificate is opened, the electronic certificate is destroyed.

In a preferred embodiment, any manipulation of the electronic certificate will cause the electronic certificate to be destroyed through electric energy, when the electric device is powered up again.

In preferred embodiments, in case of a destroyed electronic certificate, any further use of the electric device is impossible.

In a preferred embodiment, a read-only functionality of the electronic certificate avoids any manipulation of the electronic certificate, preferably avoids manipulation of information coded initially in the electronic certificate.

In preferred embodiments, the electronic certificate is implemented only by software and stored in a storage medium of the electric device.

In preferred embodiments, the electronic certificate is implemented by a combination of hardware and software.

In a preferred embodiment, the electronic certificate, comprises a hardware certification component, e.g. housing, electrical connections, and further comprises a storage where information used for determining the validity of the electronic certificate is stored according to the method for providing control of the electric device as described throughout the invention, namely for example a unique device identification of the electric device, a certification number, a certification time frame, information on a production location, on a guarantee period, on a remaining time of guarantee validity, on a date of initial usage, on a number of operating hours, on a certification institute, on a certification location.

In a preferred embodiment, the electronic certificate is implemented as a RFID tag (RFID = radio frequency identification) and, preferably, the RCCB has a RFID transceiver.

In a preferred embodiment, the electronic certificate is implemented as an electronic microcontroller comprising preferably a microprocessor and/or a data storage and/or active or passive communication means, such as transmitter, receiver, transceiver.

In a preferred embodiment, for checking the validity of the electronic certificate a data connection is established with a server of the certification institute and certification information related to the electric device is retrieved from the server of the certification institute. In a particular embodiment, an internet connection is established with a server of the certification institute, this means the aforementioned data connection is an internet connection.

In a preferred embodiment, the data connection with the certification institute is established between the RCCB and the server of the certification institute.

In a preferred embodiment, the data connection with the certification institute is established between the RCCB and the server of the certification institute by means of an internet connection between the RCCB and the server of the server of certification institute. Alternatively or in combination, the data connection between the RCCB and the server of the certification institute is an intranet connection or any wireless or wired connection between the RCCB and the server of the certification institute.

In a preferred embodiment, the data connection between the RCCB and the server of the certification institute is established automatically.

In a preferred embodiment, the data connection between the RCCB and the server of the certification institute is established automatically at the moment, when the electric device is switched on.

In a preferred embodiment, the data connection between the RCCB and the server of the certification institute is established automatically at regular time intervals, for example, every day at a determined time, or several times on every day, or every week. In preferred embodiments, the data connection between the RCCB and the server of the certification institute is established automatically at regular time intervals without regard whether the electric device is in idle mode or switched on. This means, in preferred embodiments the data connection between the RCCB and the server of the certification institute is established automatically at regular time intervals while the electric device is in idle mode or in operation mode. In further embodiments, the data connection between the RCCB and the server of the certification institute is established automatically at regular time intervals only if the electric device is in idle mode. In further embodiments, the data connection between the RCCB and the server of the certification institute is established automatically at regular time intervals only if the electric device is in operation mode. In further preferred embodiments, a data connection between the RCCB and the server of the certification institute is established even if the electric device is switched off, e.g. in order retrieved certification information needed for checking the validity of the electronic certificate and to have the needed certification information ready for checking the validity of the electronic certificate at the moment at which the electric device is switched on or even to prevent the switch on of the electric device, if the electronic certificate is determined to be invalid. Preferably, when accessing previously the electronic certificate for reading information stored at the electronic certificate, the RCCD has stored the information related to the electronic certificate needed to retrieve (updated) certification information from the certification institute.

In a preferred embodiment, the data connection between the RCCB and the server of the certification institute is established, when the RCCB is connected by a user to the internet, in particular the user of the electric device, which is then also a user of the RCCB. The user connects the RCCB manually to the internet and establishes an internet connection between the RCCB and the server of the certification institute.

In a preferred embodiment, the data connection with the server of the certification institute is established between an internet portal of the user and the server of the certification institute and the certification information is retrieved from the server of the certification institute and received by the RCCB via an interface, in particular an USB interface, a HDMI interface, an optical interface. The user establishes an internet connection from a computer of the user to the server of the certification institute. The user downloads certification information related to the electric device of which the user wants to check the validity of the electronic certificate, based on e.g. the name or number of the electric device and/or of the electronic certificate of the electric device. Then the user transmits the downloaded certification information to the RCCB. The user might establish a connection, by cable or wirelessly, to the RCCB and transmit the certification information from the computer of the user to the RCCB. Alternatively, the user stores the downloaded certification information on a storage medium, for example a USB-stick (USB = universal serial bus) or a disk, and plugs the USB-stick or the disk, into the RCCB to transmit the stored certification information to the RCCB.

Alternatively or in combination, the data connection for retrieving certification information is implemented as any wired or wireless connection between the user and the certification institute. Further, any data connection throughout this description might be implemented by wire or wirelessly.

In a preferred embodiment, the checking of the electronic certificate is implemented by the user manually. The user retrieves the information stored at the RCCB or at the electronic certificate manually from the RCCB or from the electronic certificate, respectively, e.g. by means of an USB-stick plugged into the RCCB or in the electric device, respectively, and gets the information in regard of the electronic certificate on his storage medium. Then, the user establishes an internet or further data connection to an certification institute, retrieves certification information from the certification institute and causes a check of the validity of the electronic certificate based on the information about the electronic certificate and the certification information on its on computer. Alternatively, the user provides the information stored at the USB stick to the certification information and causes a check of the validity of the electronic certificate based on the information about the electronic certificate and the certification information by the certification institute. After the validity of the electronic certificate has been checked by the user in the upper case or by the certification institute in the latter case and the result is provided to the user, the user transmits the result of the validity check to the RCCB which, in case the electronic certificate is determined to be invalid, breaks a power connection of the electric device.

In a preferred embodiment, the certification information retrieved from the certification institute is stored in the RCCB and updated in regular time intervals, preferably independent from the operation of the electric device. Preferably, as soon as the validity of the electronic certification is to be determined, the certification information is already available in the storage of the RCCB and must not be retrieved from the certification institute any more. As, preferably, the certification information stored in the RCCB is updated regularly the certification information is always up to date.

In a preferred embodiment, the RCCB is installed extern to the electric device. The RCCB might be installed between the main circuit and the socket, where the electric device is plugged in. In preferred embodiments, one RCCB is installed for protection of one electric device. In preferred embodiments, one RCCB is installed for protection of two or more electric devices. This means, in preferred embodiments, for each electric device, a respective RCCB is installed. In further preferred embodiments, one RCCB is installed for two or more electric devices so that, if one of these electric devices is determined to have in-valid electronic certificate, all of these electric devices are cut off the main current. Therefore, preferably, for each electric device a respective RCCB is installed so that, in case the electric device is cut off the main circuit in case of invalid certificate, the further electric devices are not cut off the main circuit.

In a preferred embodiment, in case of the RCCB determines that the electronic certificate is invalid, alternatively or in combination of breaking the power connection of the electric device, the RCCB informs a user of the electric device about the determination of the invalidity of the electronic certificate. The RCCB might inform the user about the invalidity of the electronic certificate by a warning signal or a warn message sent to a user's appliance which is configured to display said warn message, for example a mobile phone, smart phone etc.

In preferred embodiments, in case of potentially damage by the use of an electric device having an electronic certificate which is determined to be invalid, a choice is made between (a) the steps of informing the user of the electronic certificate without breaking the power connection of the electric device, (b) the steps of breaking the power connection of the electric device without informing the user by a warn message and (c) the steps of breaking the power connection and additionally sending a warn message to the user to inform the user about the invalidity determined by the RCCB. This choice between the steps (a), the steps (b) and the steps (c) depends on the gravity of the damages which might occur, if the electric device having the determined invalid electronic certificate is operated. In case, there is only a small risk of damage which might be caused by operating the electric device having invalid certificate (for example guarantee period only expired for a few days), the electric device might be operated and only a warn message is sent to the user of the electric device. In case, a small damage is expected to occur, if the electric device is actually operated (for example, the electronic certificate is determined to be provided by a non-authorized organization), the RCCB might break the power connection so to disable operation of the electric device without sending a warn message to the user. In case, a high risk of high damage is given; if the electric device is operated (for example, the electronic certificate of the electric has become invalid, because similar electric devices happened to cause much damage before), the RCCB might break the power connection so to disable operation of the electric device and send a warn message to the user which might be caused by the warn message not to install further electric devices of the same kind any more. Preferably, a warn message to the user might be sent in cases, where the electric devices are very important for the user to be operated and the user is by the warn message caused to replace the electric devices immediately.

In a preferred embodiment, the electric device and the RCCB are connected by wire, in particular short range powerline, or wirelessly, in particular near field communication, NFC, in particular RFID technology.

In a preferred embodiment, a RCCB is installed within the electric device. Preferably, the RCCB is installed within the housing of the electric device and connected with the electric device by wire or wirelessly. In further embodiments, the RCCB is installed within the electric circuitry of the electric device. In preferred embodiments, the RCCB might be implemented as a software module as part of the software stored in the electric device. In preferred embodiments, the RCCB is implemented as a combination of software and hardware and implemented as part of the electronic of the electric device.

### Brief description of the figures

The features and embodiments of the invention will be described in the following detailed description, in which
- Fig. 1: depicts a schematic overview of a method for providing control of an electric device
- Fig. 2: depicts a schematic view of a RCCB according to an embodiment of a method for providing control of an electric device
- Fig. 3: depicts a schematic view of an electric device according to an embodiment of a method for providing control of an electric device

The described embodiments are for illustrative reasons only, while the scope of the invention is defined by the claims.

### Detailed description

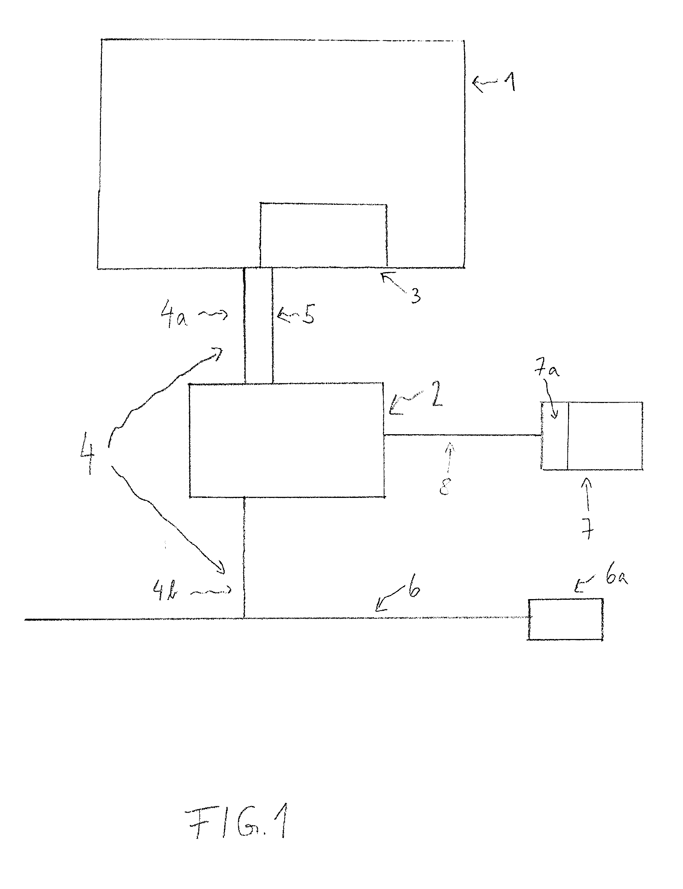

Fig. 1 depicts an electric device 1 and a RCCB 2. The RCCB 2 is installed extern to the electric device 1. The RCCB 2 is installed between the electric device 1 and the main circuit 6. The main circuit 6 is connected to a (electrical) power source 6a. The power connection 4 between the electric device 1 and the main circuit 6 goes through the RCCB 2. The RCCB 2 is able to break the power connection 4 between the electric device 1 and the main circuit 6. The power connection 4 between the electric device 1 and the main circuit 6 comprises the power connection 4a between the electric device 1 and the RCCB 2 and the power connection 4b between the RCCB 2 and the main circuit 6. The electric device 1 contains an electronic certificate 3. By the certificate control connection 5 between the RCCB 2 and the electric device 1, the RCCB 2 is able to connect to the electric device 1 to check the validity of the electronic certificate 3 contained in the electric device 1.

For providing control of the electric device 1 the RCCB 2 checks the validity of the electronic certificate 3 contained by the electric device 1 and if the RCCB 2 determines that the electronic certificate 3 is invalid, the RCCB 2 breaks the power connection 4 of the electric device 1.

The electronic certificate 3 comprises one or more of the group of: a unique device identification of the electric device 1, a certification number, e.g. a number of the electronic certificate, a certification time frame, information on a the electric device, e.g. on production location, on a guarantee period, on a remaining time of guarantee validity, on a date of initial usage, on a number of operating hours, further information on a certification institute, on a certification location.

In the described embodiment, the validity of the electronic certificate 3 is performed during operation mode of the electric device 1. At the moment, when the electric device 1 is switched on for operation, the RCCB 2 checks the validity of the electronic certificate 3. At the moment, when the electric device 1 is switched on, the RCCB 2 is caused to check the validity of the electronic certificate 3. The RCCB 2 might be triggered by an electric impulse provided by the electric device 1 at the moment at which the electric device 1 is switched on for operation to check the validity of the electronic certificate 3. Alternatively or in combination, the RCCB 2 might be informed about the switching on of the electronic device 1 via the certification control connection 5 by a message from the electronic device 1.

The certification control connection 5 might be implemented via a connection separate from the power connection 4a between the RCCB 2 and the electric device 1 and might be implemented as a wired or wireless connection.

Alternatively, the certification control connection 5 might be implemented by means of the power connection 4a between the RCCB 2 and the electric device 1 as a powerline communication connection. In this case the power connection 4a between the RCCB 2 and the electric device 1 is used to provide electric power to the electric device 1 and for communication between the RCCB 2 and the electric device 1.

The certification control connection 5 is used by the RCCB 2 in particular for transmitting information for checking the validity of the electronic certificate 3. The RCCB 2 retrieves information from the electric device 1 about the electronic certificate 3 and compares this information with certification information. This certification information might be data stored in a data storage in the RCCB 2, for example in the form of a mapping table. The mapping table might comprise data about expiry period of electronic certificates indicated by the number of the electronic certificates. The RCCB 2 might retrieve from the electric device 1 information about the number of the electronic certificate 3 of the electric device 1 and checks by the mapping table in the data storage of the RCCB 2, if the electronic certificate 3 is still valid or if the validity period is expired.

Preferably, the RCCB 2 retrieves certification information from a certification institute 7. Preferably, the RCCB 2 stores the certification information in a data storage, which might be termed as a certification storage or certification and decision rules storage, as preferably the storage contains also rules under which conditions the electronic certificate is determined to be invalid, for example after validity expiry. Preferably, the RCCB 2 retrieves certification information specifically related to the electric device 1 or the electronic certificate 3 which the RCCB 2 wants to check in regard of the validity of the electronic certificate 3. Therefore, in preferred embodiments, the RCCB 2 first retrieves the number of the electric device 1 and/or of the electronic certificate 3 from the electric device 1 and second retrieves certification information from the certification institute 7, more particularly from a server 7a of the certification institute 7, related to the electronic certificate 3 based on the number of the electronic certificate 3. In further embodiments, the RCCB 2 has already stored the number of the electric device 1 and/or of the electronic certificate 3 in its data storage and might retrieve certification information from the certification institute 7 based on the stored number of the electric device 1 and/or of the electronic certificate 3.

For retrieving certification information with the certification institute 7, the RCCB 2 establishes a data connection 8 with a server 7a of the certification institute 7. The data connection 8 between the RCCB 2 and the certification institute 7, more specifically, between the RCCB 2 and a server 7a of the certification institute 7, might be a wire connection or a wireless connection. The data connection 8 between the RCCB 2 and the server 7a of the certification institute 7 might be a connection via the internet, for short an internet connection.

In preferred embodiments, the RCCB 2 retrieves certification information from a cloud-based database. Preferably, a certification institute stores certification information in a database which is implemented by a cloud network, this means by a network which is virtually distributed on a plurality of servers virtually grouped together as a cloud database or cloud-based database. In this case, the data connection 8 is implemented based on a cloud interface of the RCCB 2 to the network cloud which comprises the server where the certification information is stored, e.g. the server 7a of the certification institute 7 or a cloud server used amongst other by the certification institute 7.

Preferably, the RCCB 2 establishes a data connection 8 via the internet with a server 7a of the certification institute 7, where the certification information related to the electric device 1 and/or the electronic certificate 3 is stored and the RCCB 2 retrieves certification information related to the electric device 1 and/or related to the electronic certificate 3 from a server 7a of the certification institute 7, more precisely the server 7a where the requested certification information is stored.

In the described embodiment, the data connection 8 between the RCCB 2 and the server 7a of the certification institute 7 is established automatically, more specifically at the moment, when the electric device 1 is switched on. When the electric device 1 is switched on, the RCCB 2 receives information about the switch on of the electric device 1 via the certification control connection 5 and/or via the power connection 4a between the electric device 1 and the RCCB 2. For example, the RCCB 2 receives an electric impulse or a trigger signal via the certification control connection 5 and/or via the power connection 4a between the electric device 1 and the RCCB 2 that the electric device 1 is switched on. Alternatively, the RCCB 2 determines that the electric device 1 is switched on based on the electric load caused at the RCCB 1 by switching on of the electric device 1.

Preferably, as the RCCB 2 determines that the electric device 1 is switched on, the RCCB 2 establishes a data connection 8 via the internet to the server 7a of the certification institute 7, where the certification information related to the electric device 1 and/or the electronic certificate 3 is stored and retrieves the certification information related to the electric device 1 and/or to the electronic certificate 3 from the certification institute.

In preferred embodiments, in case the RCCB 2 determines that the electronic certificate 3 is invalid or fake, the RCCB 2 breaks the power connection 4.

In preferred embodiments, in case the RCCB 2 determines that the electronic certificate 3 is invalid or fake, the RCCB 2 informs a user of the invalid or fake certificate 3 alternatively or in combination to breaking the power connection 4.

In preferred embodiments, based on checking the electronic certificate 3, the invalidity of the electronic certificate 3 is determined, because the certification period of the electronic certificate 3 is expired.

In preferred embodiments, the electronic certificate 3 is determined to be invalid, because the manufacturer declares the electronic certificate 3 to be invalid, for example in a call-back situation. The manufacturer of the electric device 1 wants to call back the electric device 1 or at least prevent further usage of the electric device 1, e.g. because of determined construction errors or software bugs causing hazard, damage, etc.

In preferred embodiments, the electronic certificate 3 is invalid, because the guarantee period of the electric device 1 is expired.

In preferred embodiments, the electronic certificate 3 is invalid, because the organization which provided the electronic certificate 3 is not authorized to provide the electronic certificate 3. In this case, the electronic certificate 3 hasn't been valid at all, this means has been invalid already at the moment when it has been provided at the electric device 1.

In preferred embodiments, the certification information comprises information that the organization which provided the electronic certificate 3 is not authorized any more to provide the electronic certificate 3, which causes the electronic certificate to become invalid.

Preferably, the certification information comprises data about a validity duration or validity period of the electronic certificate 3 of the electric device 1. For example, the certification information comprises information that the validity period of the electronic certificate 3 is expired. Thus, the RCCB 2 determines that the electronic certificate 3 of the electric device 1 is not valid (any more), this means the electronic certificate 3 is invalid.

As the RCCB 2 has determined that the electronic certificate 3 is invalid, the RCCB 2 breaks the power connection 4 between the electric device 3 and the main circuit 1.

Preferably and usually, the RCCB 2 has still and additionally the functionality of a commonly known residual-current circuit breaker. This means, the RCCB 2 breaks the power connection 4 between the electric device 1 and the main circuit 6, if either or both of the following conditions are met: The RCCB 2 determines that the electronic certificate 3 of the electric device 1 is not valid and/or the RCCB 2 determines that the electric device 1 does not work properly based on an determined imbalance between the current on the energized conductor and the return neutral conductor. Preferably, the RCCB 2 which has the functionality of a commonly known residual-current circuit breaker and the functionality of breaking the power connection based on a determined invalidity of an electronic certificate 3 of the electric device 1 is termed an "enhanced" RCCB.

In preferred embodiments, in addition to the RCCB, further optional security appliances, such as overload breaker, fuse(s) etc. are installed.

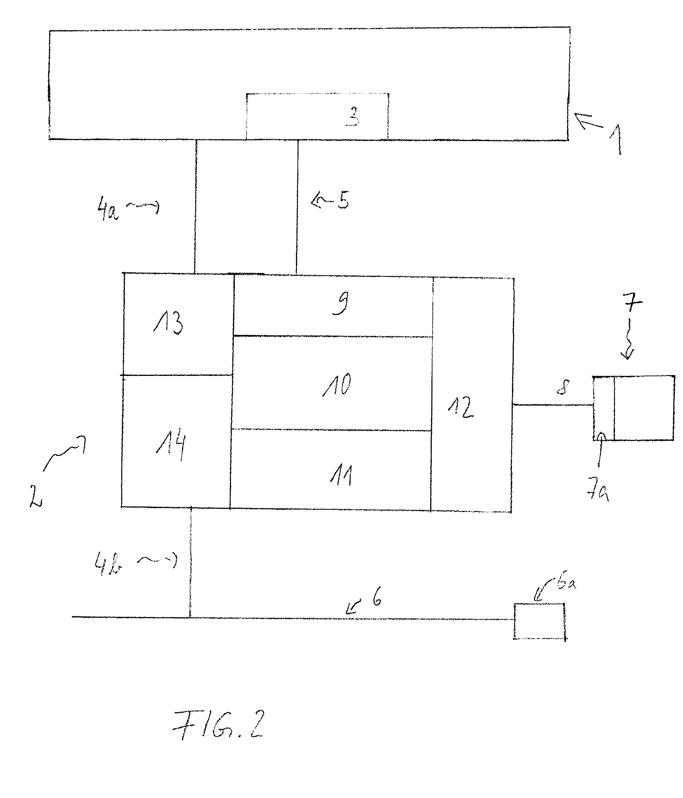

Figure 2 depicts a RCCB 2 according to preferred embodiments of the invention. The RCCB 2 is implemented extern to the electric device 1. The RCCB 2 might be termed "enhanced RCCB", because it combines the functionality of a commonly known residual-current circuit breaker and the functionality of breaking the power connection of the electric device 1 in case of the electronic certificate 3 being determined to be invalid.

The RCCB 2 comprises power breaking means 13 and a controller 10 being adapted to check the validity of an electronic certificate 3 contained by an electric device 1 and, if the RCCB 2, more specifically by the controller 10, determines that the electronic certificate 3 is invalid, to break a power connection 4a, 4b between an electric power source 6a, connected via the main circuit 6, and the electric device 1 by the power breaking means 13.

In more detail, the RCCB 2 is provided with a power connection 4a between the RCCB 2 to the electric device 1 and a power connection 4b to the main circuit 6. The RCCB 2 and the electric device 1 are connected via a certification control connection 5. Further, data connection 8 is depicted which might be an internet connection to a certification institute 7, in particular a server 7a of the certification institute 7, wherein the server 7a could also be implemented within a cloud-based network. The RCCB 2 has a device communication component 9 for communication to the electric device 1, a controller 10 and a certification and decision rules storage 11. Further, the RCCB2 has a cloud interface controller 12 and a breaker 13 which comprises means to break the power connection 4 between the main circuit 6 and the electric device 1 by cutting off the electric power connection 4. Further, the RCCB 2 comprises a commonly known residual-current control 14, which breaks the power connection 4 in case of determined imbalance between the current on the conductive line to the electric device 1 and the current on the neutral line from the electric device 1.

The certification control connection 5 between the electric device 1 and the RCCB 2 might be implemented by wire or wirelessly. The certification control connection 5 might be implemented by near field communication, NFC, in particular using RFID technology, in particular in case the electronic certificate 3 is implemented as a RFID tag. The certification control connection 5 might be implemented by means of the power connection 4a between the RCCB 2 and the electric device 1, in particular by means of short range powerline data connection. In this case, the certification control connection 5 depicted in figure 2 is only a virtual connection and is physically implemented by the power connection 4a. This means the power connection 4a is also used to transmit the data between the electric device 1/ electronic certificate 3 and the RCCB 2, e.g. the data retrieved by the RCCB 2 from the electric device 1/ the electronic certificate 3 to determine the validity of the electronic certificate 3.

In preferred embodiments, the data connection 8 with the server 7a of the certification institute 7 is not established between the RCCB 2 and the certification institute 7, but rather between an internet portal of a user of the electric device and the server 7a of the certification institute 7 and the certification information is retrieved from the server 7a of the certification institute 7 and received by the RCCB 2 via an interface, in particular an USB interface, a HDMI interface, an optical interface etc.. In this case, the interface 12 of the RCCB 2 in figure 2 depicts the interface to receive the certification information provided by the user. In further embodiments, the data connection 8 might be any connection to a user's computer, by wire or wireless, e.g. via an intranet or via the internet and the interface 12 is the appropriate interface for the respective data connection 8.

The RCCB 2 as described above in the context of figures 1 and 2 is extern to the electric device 1. In further embodiments, the RCCB 2 having both the functionality of a commonly used residual-current circuit breaker and the functionality of breaking the power connection of the electric device 1 in case of the electronic certificate 3 is determined to be invalid might be installed within the electric device 1.

In further preferred embodiments, the RCCB 2 has only the functionality of breaking the power connection of the electric device in case of the electronic certificate 3 being determined to be invalid without the functionality of a commonly known residual-current circuit breaker. The functionality of the RCCB 2 to break the power connection of the electric device in case of the electronic certificate being determined to be invalid might be installed within the electric device 1 or as a separate element extern to the electric device 1. Additionally to such functionality of breaking the power connection of the electric device 1 in case of the electronic certificate 3 being determined to be invalid a commonly known residual-circuit power breaker might be installed as a separate device.

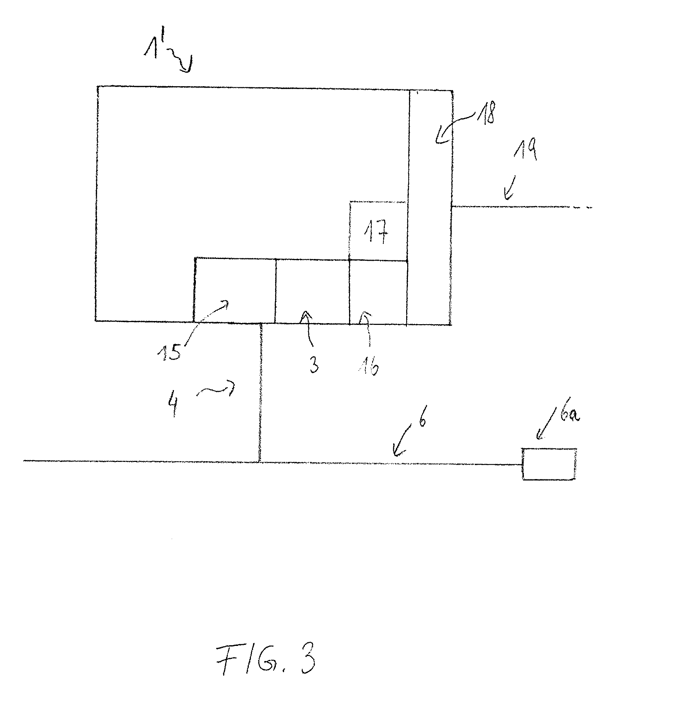

Figure 3 depicts an electric device 1', in which the functionality of breaking the power connection 4 between the electric device 1' and the power source 6a is implemented within the electric device 1'. The electric device '1 comprises power breaking means 15 and a controller 16 being adapted to check a validity of an electronic certificate 3 contained by the electric device 1' and, if the controller 16 determines that the electronic certificate 3 is invalid, to break a power connection 4 between an electric power source 6a, in particular connected via the main circuit 6, and the electric device 1' by the power breaking means 15. Furthermore, the electric device 1' comprising the RCCB functionality has a certification and decision rules storage 17 corresponding to the certification and decision rules storage 11 of the RCCB 2 in figure 2, and preferably a communication interface controller 18, preferably a cloud interface controller 18 corresponding to the cloud interface controller 12 of the RCCB 2 in figure 2, for a data connection 19 to a certification institute (not depicted) or for plug in of data stored on a storage medium, e.g. USB-stick, wherein the data connection 19 in figure 3 corresponds to the data connection 8 of the RCCB 2 in figure 2. Furthermore, what has been described in the context of the electric device 1 installed extern to the RCCB 2 applies analogously to the electric device 1' taking in consideration that the method steps implemented by or in regard of the RCCB 2 of breaking the power connection in case of determined invalidity of the electronic certificate 3 are now implemented by or in regard of the electric device 1' as it possesses the corresponding functionality of the RCCB 2 inside itself. In particular, if the electric device 1', by means of the controller 16, determines that the electronic certificate 3 is invalid, the electric device 1', by means of its power breaking means 15, break a power connection 4 between the electric device 1' and the electric power source 6a. The information transfer to the certification institute and/or to the user is implemented via data connection 19 and is described in detail in the context of figures 1 and 2 with respect to the extern RCCB 2.

The elements and devices of the invention might be implemented by the use of hardware, software and combination thereof. In particular, the electronic certificate 3, the controller 16, 18 of the electric device 1', the RCCB 2 and/or the controller 10, 12, 14 of the RCCB 2 may be implemented through the use of hardware, software and/or hardware capable of executing software in association with appropriate software.

More specifically, the electronic certificate 3, the controller 16, 18 of the electric device 1', the RCCB 2 and/or the controller 10, 12, 14 of the RCCB 2 can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of the electronic certificate 3, the controller 16, 18 of the electric device 1', the RCCB 2 and/or the controller 10, 12, 14 of the RCCB 2 may be implemented as processing blocks in a software program.

The electronic certificate 3, the controller 16, 18 of the electric device 1', the RCCB 2 and/or the controller 10, 12, 14 of the RCCB 2 may comprise program code embodied in tangible media, such as magnetic recording media, optical recording media, solid state memory, floppy diskettes, CD-ROMs, hard drives, or any other machine-readable storage medium, wherein, when the program code is loaded into and executed in the electronic certificate 3, the controller 16 18 of the electric device 1', the RCCB 2 and/or the controller 10, 12, 14 of the RCCB 2, then the electronic certificate 3, the controller 16, 18 of the electric device 1', the RCCB 2 and/or the controller 10, 12, 14 of the RCCB 2 become an apparatus used for practicing the invention.

The invention has the advantage that it brings much more safety to the user of an electric device, because an electric device having an electronic certificate which is invalid, can be prevented from being operated as soon as the invalidity of the electronic certificate is detected, in particular before the electric device causes damage. Furthermore, the invention helps to avoid product piracy, because it might be determined that the electronic certificate and also the electric device are not original (not produced by the original manufacturer), but faked (by a manufacture which copied the original electric device and the electronic certificate).

A home protected with the "enhanced" RCCB according to the invention will also have a higher, better fire protection, because unsafe devices having invalid electronic certificates are switched off. This could have a positive effect on the insurance costs.

As the functionality of checking the validity of an electronic certificate of the electric device is preferably implemented by the "enhanced" RCCB, a simple exchange of a commonly used residual-current circuit breaker by the "enhanced" RCCB enables use of the described inventive functionality without further change of the installation, in particular without change of the installation architecture.

## Claims

1. A method for providing control of an electric device (1), the method comprising the steps of:
- checking, by a residual-current circuit breaker (2), RCCB, a validity of an electronic certificate (3) contained by the electric device (1);
- if, by the RCCB (2), the electronic certificate (3) is determined to be invalid, breaking, by the RCCB (2), a power connection (4) of the electric device (1).

2. The method according to claim 1, wherein the electronic certificate (3) comprises one or more of the group of: a unique device identification of the electric device (1), a certification number, a certification time frame, information on a production location, on a guarantee period, on a remaining time of guarantee validity, on a date of initial usage, on a number of operating hours, on a certification institute (7), on a certification location.

3. The method, according to claim 1, wherein the step of checking the validity of the electronic certificate (3) is performed during idle mode of the electric device (1).

4. The method according to claim 1, wherein the step of checking the validity of the electronic certificate (3) is performed during operation mode of the electric device (1), in particular at the moment, when the electric device (1) is switched on for operation.

5. The method according to claim 1, wherein the step of checking the validity of the electronic certificate (3) comprises:
- comparing the electronic certificate (3) of the electric device (1) with certification information retrieved from a certification institute (7).

6. The method according to claim 5, wherein the steps of checking the validity of the electronic certificate (3) comprises:
- establishing a data connection (8), in particular an internet connection, with a server (7a) of the certification institute (7); and
- retrieving certification information related to the electric device (1) from the server (7a) of the certification institute (7).

7. The method according to claim 6, wherein the data connection (8) with the certification institute (7) is established between the RCCB (2) and the server (7a) of the certification institute (7).

8. The method according to claim 7, wherein the data connection (8) between the RCCB (2) and the server (7a) of the certification institute (7) is established automatically, in particular at the moment, when the electric device (1) is switched on, or at regular time intervals.

9. The method according to claim 7, wherein the data connection (8) between the RCCB (2) and the server (7a) of the certification institute (7) is established, when the RCCB (2) is connected by a user to the internet.

10. The method according to claim 6, wherein the data connection (8) with the server (7a) of the certification institute (7) is established between an internet portal of a user and the server (7a) of the certification institute (7) and the certification information retrieved from the server (7a) of the certification institute (7) is received by the RCCB (2) via an interface (12), in particular an USB interface, a HDMI interface, an optical interface.

11. The method according to claim 1, wherein the RCCB (2) is installed extern to the electric device (1).

12. The method according to claim 11, wherein the electric device (1) and the RCCB (2) are connected (4a) by wire, in particular short range powerline, or wirelessly, in particular near field communication, NFC, in particular RFID technology.

13. A residual-current circuit breaker (2), RCCB, wherein the RCCB (2) comprises power breaking means (13) and a controller (10) being adapted to
- check a validity of an electronic certificate (3) contained by an electric device (1); and
- if the RCCB (2) determines that the electronic certificate (3) is invalid, to break a power connection (4) between an electric power source (6a) and the electric device (1) by the power breaking means (13).

14. An electric device (1') comprising power breaking means (15) and a controller (16) being adapted to
- check a validity of an electronic certificate (3) contained by the electric device (1'); and
- if the controlled (16) determines that the electronic certificate (3) is invalid, to break a power connection (4) between an electric power source (6a) and the electric device (1') by the power breaking means (15).

15. A software product adapted to execute the method according to claims 1 to 12, when executed on a computer.
